Europäisches Patentamt

European Patent Office

Office européen des brevets

(19)

(11) Publication number: **0 086 067**
A1

(12) # EUROPEAN PATENT APPLICATION

(21) Application number: **83300449.2**

(22) Date of filing: **28.01.83**

(51) Int. Cl.³: **A 23 K 1/20**
**A 23 K 1/22**

(30) Priority: **02.02.82 GB 8202922**

(43) Date of publication of application:
**17.08.83 Bulletin 83/33**

(84) Designated Contracting States:
**AT BE CH DE FR GB IT LI NL**

(71) Applicant: **BIP CHEMICALS LIMITED**
**20 St. Mary's Parsonage**
**Manchester M3 2NL(GB)**

(72) Inventor: **Barrett, Robert McDowell**
**26 Kidderminster Road**
**West Hagley Worcs(GB)**

(72) Inventor: **Ogden, Dennis Henry**
**167 Goldthorne Hill**
**Penn Wolverhampton Staffs(GB)**

(74) Representative: **Hadfield, Robert Franklin et al,**
**20, St. Mary's Parsonage**
**Manchester M3 2NL(GB)**

(54) Improvements in or relating to the manufacture of feedstuffs for animals.

(57) In the manufacture of feedstuff blocks containing a U.F. resin as a binder, two pumpable slurries of solid nutrients are prepared one of which contains incured binder resin and the other an acid catalyst. The slurries are mixed and the reacting mixture extruded or cast into the desired shape or form.

EP 0 086 067 A1

- 1 -

Improvements in or relating to manufacture for
feedstuffs for animals

The invention relates to the manufacture of animal
feedstuffs, and particularly to the manufacture of
feedstuff blocks.

UK Patent Application No. 2,013,471A relates to the
preparation of feedstuff blocks which utilise a
urea-formaldehyde resin as binder and which are cast in
a mould. However, we have found that the process for
making the blocks which is described in that
specification does not facilitate commercial production
of blocks since when all the ingredients required in
such a block are present, the simple mixing process
described in that specification does not produce a
satisfactory product.

In the process described in UK 2,013,471A mixing of all
the large proportion of the solid ingredients with resin
can be carried out only with difficulty but is then
liable to lead to problems of rapid local cure when acid
catalyst is added, owing to the difficulties of rapidly
evenly dispersing the catalyst in the mixture, such
local curing can give rise to local degradation of the
binder and poor product ensues.

We have now devised a method for manufacturing animal
feedstuffs which is aimed at commercial production of a
consistent product.

**0086067**

According to the present invention there is provided a method for the manufacture of animal feedstuffs which comprises preparing at least two pumpable slurries, one of which contains an uncured urea-formaldehyde resin and the other contains acid catalyst for the resin, both containing solid ingredients of a feedstuff formulation, pumping the slurries in separate streams to a mixing head where the slurries are intimately mixed to initiate cure of the resin, and wherefrom the resultant curing mixture is cast or extruded into the desired shape or form.

We have found that both the resin and the acid catalyst are convenient carriers for solid components of the feedstuff mixture and metering and mixing of the two slurries is readily accomplished to provide a product of suitably uniform consistency and properties.

It is preferred that the reacting mixture is cast into blocks in open-topped disposable moulds, e.g. of cardboard, which can then be used to store and protect the product, and need not even be removed when the blocks are put out for animals since, for example, cattle are able to lick the open top of the block.

If the feedstuff mixture is to contain a strongly basic substance, such as the calcined magnesite conveniently used to introduce magnesium, it is useful to introduce such material into the resin component and use the resultant exothermic acid/base reaction to accelerate cure of the urea-formaldehyde resin binder as described in our patent specification relating to "Improvements in the manufacture of animal feedstuffs" first filed on even date herewith, under UK Patent Application No. 8202921.

**0086067**

In this process the intimate pre-mixture of both resin and acid with nutrient solids to make slurries followed by rapid mixing of flowing streams of components enables the mixing to be controlled and the catalyst dispersed evenly to initiate the cure of the resin binder without local degradation.

There is no constraint on the type of urea-formaldehyde resin used, and liquid or solid resins can be utilised in the process. The amount of resin used in the blocks will generally be above about 5% to ensure good binding and below about 40% to make sure the blocks are not too hard. Where a solid resin is used, water will normally be introduced as the medium in which the resin and other components are dispersed.

The other components of the blocks, may be selected from materials conventionally used for such purposes which may be organic, for example, molasses, carbohydrates, bran and oil-cake, and inorganic, for example, calcined magnesite, calcium sulphate, chloride, phosphates and carbonate and other sulphates and phosphates.

If desired the blocks also include other ingredients to supplement particular items in an animal diet, or by way of medication. Examples of ingredients which it may be convenient to add are vitamins, trace elements (selenium, manganese etc) and hormones.

The acid catalyst is preferably phosphoric acid, because of the nutritional value of phosphorus but other acids such as sulphuric acid may be used instead.

The invention will now be described in more detail by reference to Examples.

Examples 1 and 2

In each case two component slurries A and B were prepared, A being basic and B acidic. The solids present were premixed with sufficient liquid (resin or acid plus water) to facilitate pumping. The two components were stored separately and came together only during pumping of the mixture into the block moulds when the two components were pumped to two separate inlets of a mixing head and mixed inside the head, reacting mixture being fed therefrom into moulds, which were open-topped cardboard boxes.

In both Examples part of the acid was to be neutralized with calcined magnesite, which was a part of the resin component and reacted exothermally with the acid immediately upon mixing the two, thus generating heat which accelerated cure of the blocks manufactured. The setting time of the blocks of Example 1 was $4\frac{1}{2}$ minutes approx. and that of the blocks of Example 2 was $3\frac{1}{2}$ minutes approx.

The formulations and analyses of the blocks made in these Examples are tabulated below in Table 1.

PATENT 2 - The mixing of two pumpable slurries

TABLE I

| Components (parts by weight) | Component A | Component B | Analysis | | | | |
|---|---|---|---|---|---|---|---|
| | | | N2 | P | Ca | Mg | Salt |
| Phosphoric Acid (65%) | 20 | | | | | | |
| Dicalcium phosphate | 38 | 5 | | | | | |
| Molasses | 15 | 21 | | | | | |
| Water | 3 | | | | | | |
| Urea formaldehyde resin | | 15 | | | | | |
| Calcined magnesite | | 4 | 3 | 12 | 12 | 2.5 | - |
| Molasses | 19 | | | | | | |
| Sulphuric acid (77%) | 26 | | | | | | |
| Magnesium sulphate | 28 | | | | | | |
| Water | 3 | | | | | | |
| Urea formaldehyde resin | | 15 | | | | | |
| Calcined magnesite | | 4 | | | | | |
| Sodium chloride | | 5 | 3 | - | - | 5 | 5 |

The setting time after pouring example 1 was 4½ minutes approx, and for example 2 was 3½ minutes approximately.

CLAIMS:-

0086067

1. A method for the manufacture of animal feedstuffs of a composition including nutrients and a urea-formaldehyde resin binder characterised in that it comprises preparing at least two pumpable slurries, one of which contains an uncured urea-formaldehyde resin and the other contains acid catalyst for the resin, both containing solid ingredients of a feedstuff formulation, pumping the slurries in separate streams to a mixing head where the slurries are intimately mixed to initiate cure of the resin, and wherefrom the resultant curing mixture is cast or extruded into the desired shape or form.

2. A method according to claim 1 in which the mixture is cast into open-topped disposable moulds.

3. A method according to claim 1 or 2 in which the amount of the resin binder used is such as to produce blocks containing an amount of the resin which is in the range 5 to 40% by weight of the blocks.

4. A method according to claim 1, 2 or 3 in which one component is a slurry of nutrients in an aqueous solution of a urea-formaldehyde resin, and the other component is a slurry of nutrients in an aqueous solution of an acid such as phosphoric or sulphuric acid.

5. A method according to any one of claims 1 to 4 in which the first slurry includes the urea-formaldehyde resin, molasses, dicalcium phosphate and calcined magnesite, and the other slurry includes molasses, acid and dicalcium phosphate.

0086067

6.    A method according to any one of claims 1 to 4
wherein the first slurry includes the urea-
formaldehyde resin, calcined magnesite and
salt and the other slurry includes molasses,
acid and magnesium sulphate.

7.    A method according to any one of claims
1 to 5 in which the acid is phosphoric acid.

8.    A method according to any one of claims 1 to 4
and 6 in which the acid is sulphuric acid.

## DOCUMENTS CONSIDERED TO BE RELEVANT

| Category | Citation of document with indication, where appropriate, of relevant passages | Relevant to claim | CLASSIFICATION OF THE APPLICATION (Int. Cl. 3) |
|---|---|---|---|
| D,A | GB-A-2 013 471 (PRODUITS CHIMIQUES UGINE) <br> * Abstract, claim 1 * | | A 23 K 1/20 <br> A 23 K 1/22 |
| A | FR-A-2 218 840 (BEECHAM GROUP LTD.) <br> * Claim 1 * | | |
| A | DE-A-2 939 337 (M. ESCH) <br><br> * Claims 1, 2, 5, 6 * | | |
| A | FR-A-2 351 607 (M. ADOLPHE) <br><br> * Page 2, example, claims 1, 2 * | | |

TECHNICAL FIELDS
SEARCHED (Int. Cl. 3)

A 23 K 1/00

The present search report has been drawn up for all claims

| Place of search <br> BERLIN | Date of completion of the search <br> 05-04-1983 | Examiner <br> SCHULTZE D |
|---|---|---|